# EUROPEAN PATENT APPLICATION

(11) **EP 1 675 354 A1**
(43) Date of publication of application: **28.06.2006**
(21) Application number: 05257622.0
(22) Date of filing: 13.12.2005
(51) Int. Cl.: H04L 29/08

(54) **Method and apparatus for reporting implicit events to presence server**

(30) Priority: 21.12.2004 US 18832
(71) Applicant: LUCENT TECHNOLOGIES INC., Murray Hill, New Jersey 07974-0636 (US)
(72) Inventor: Unmehopa, Musa Raoul, 3813 ZL Amersfoort (NL)
(74) Representative: Sarup, David Alexander

(57) **Abstract**

The present invention provides a method of notifying a network of a change in availability status of a mobile unit. The method includes detecting an implicit presence event associated with the mobile unit, forming an explicit presence event based on the implicit presence event, and providing the explicit presence event to the network.

## Description

### BACKGROUND OF THE INVENTION

### 1. FIELD OF THE INVENTION

This invention relates generally to telecommunication systems, and, more particularly, to wireless telecommunication systems.

### 2. DESCRIPTION OF THE RELATED ART

An end user of a mobile unit in a wireless telecommunications network is not always available to receive voice calls and/or data transmissions. For example, the end user may be sleeping, in a meeting that cannot be interrupted by a telephone call, at lunch, and the like. Accordingly, the end user may explicitly indicate that he or she is unavailable to receive voice calls and/or data transmissions. For example, the end user may power down the mobile unit when he or she is unavailable to receive voice calls and/or data transmissions. A previously unavailable end user may also explicitly indicate that he or she is available to receive voice calls and/or data transmissions. For example, the end user may power up the mobile unit when he or she is available to receive voice calls and/or data transmissions. The various actions taken by an end user to indicate a change in his or her availability to the wireless telecommunications system are generally referred to as "explicit presence events."

Explicit presence events may be detected by the wireless telecommunication network and used to modify operation of the wireless telecommunications network. For example, if the wireless telecommunication network detects that the mobile unit has powered down, the wireless telecommunication network may direct any incoming calls for that mobile unit to a voicemail program associated with the mobile unit. For another example, if the user provides a time and/or date of unavailability, a presence-aware calendar program associated with the wireless telecommunication network may direct any incoming calls received during the provided time and/or date of unavailability to a voicemail program. For yet another example, if the wireless telecommunication network detects that the mobile unit has been powered up, the wireless telecommunication network may resume directing incoming calls to the mobile unit.

Other end user actions may also indicate a possible change in the availability of the end user. For example, the end user may switch his or her mobile unit from ringing mode to silent mode or vibrate mode when entering a meeting. Although this action might indicate a change in the availability of the end user, it also might not indicate a change. Depending on the circumstances, the end user may still wish to receive incoming calls and/or data communications. Consequently, conventional mobile units typically do not report these events as explicit presence events. Accordingly, if the end user does not also provide an explicit presence event indicating his or her unavailability, the wireless telecommunication network will assume that the end user is available and continue to direct incoming calls to the mobile units. For another example, the end user may switch his or her mobile unit from silent mode to ringing mode when leaving a meeting. Depending on the circumstances, this action may or may not indicate that the user is now available to receive voice calls and/or data transmissions. Consequently, conventional mobile units typically do not report these events as explicit presence events. Thus, if the end user does not provide an explicit presence event indicating his or her availability, the wireless telecommunication network may not recognize that the end user is now available. Consequently, the wireless telecommunication network may continue to redirect incoming calls to voicemail, instead of directing the incoming calls to the mobile unit.

The present invention is directed to addressing the effects of one or more of the problems set forth above.

### SUMMARY OF THE INVENTION

The following presents a simplified summary of the invention in order to provide a basic understanding of some aspects of the invention. This summary is not an exhaustive overview of the invention. It is not intended to identify key or critical elements of the invention or to delineate the scope of the invention. Its sole purpose is to present some concepts in a simplified form as a prelude to the more detailed description that is discussed later,

In one embodiment of the present invention, a method is provided for notifying a network of a change in availability status of a mobile unit. The method includes detecting an implicit presence event associated with the mobile unit, forming an explicit presence event based on the implicit presence event, and providing the explicit presence event to the network.

### BRIEF DESCRIPTION OF THE DRAWINGS

The invention may be understood by reference to the following description taken in conjunction with the accompanying drawings, in which like reference numerals identify like elements, and in which:
Figure 1 shows a wireless telecommunication system including a network, in accordance with the present invention;
Figure 2 conceptually illustrates one exemplary embodiment of a mobile unit that forms explicit presence events based on implicit presence events and reports the explicit presence events to a network, such as the network shown in Figure 1, in accordance with the present invention; and
Figure 3 conceptually illustrates one exemplary embodiment of a method of notifying a network of a change in the availability status of a mobile unit, in accordance with the present invention.

While the invention is susceptible to various modifications and alternative forms, specific embodiments thereof have been shown by way of example in the drawings and are herein described in detail. It should be understood, however, that the description herein of specific embodiments is not intended to limit the invention to the particular forms disclosed, but on the contrary, the intention is to cover all modifications, equivalents, and alternatives falling within the spirit and scope of the invention as defined by the appended claims.

### DETAILED DESCRIPTION OF SPECIFIC EMBODIMENTS

Illustrative embodiments of the invention are described below. In the interest of clarity, not all features of an actual implementation are described in this specification. It will of course be appreciated that in the development of any such actual embodiment, numerous implementation-specific decisions should be made to achieve the developers' specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure.

Portions of the present invention and corresponding detailed description are presented in terms of software, or algorithms and symbolic representations of operations on data bits within a computer memory. These descriptions and representations are the ones by which those of ordinary skill in the art effectively convey the substance of their work to others of ordinary skill in the art. An algorithm, as the term is used here, and as it is used generally, is conceived to be a self-consistent sequence of steps leading to a desired result. The steps are those requiring physical manipulations of physical quantities. Usually, though not necessarily, these quantities take the form of optical, electrical, or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise, or as is apparent from the discussion, terms such as "processing" or "computing" or "calculating" or "determining" or "displaying" or the like, refer to the action and processes of a computer system, or similar electronic computing device, that manipulates and transforms data represented as physical, electronic quantities within the computer system's registers and memories into other data similarly represented as physical quantities within the computer system memories or registers or other such information storage, transmission or display devices.

Note also that the software implemented aspects of the invention are typically encoded on some form of program storage medium or implemented over some type of transmission medium. The program storage medium may be magnetic (e.g., a floppy disk or a hard drive) or optical (e.g., a compact disk read only memory, or "CD ROM"), and may be read only or random access. Similarly, the transmission medium may be twisted wire pairs, coaxial cable, optical fiber, or some other suitable transmission medium known to the art. The invention is not limited by these aspects of any given implementation.

The present invention will now be described with reference to the attached figures. Various structures, systems and devices are schematically depicted in the drawings for purposes of explanation only and so as to not obscure the present invention with details that are well known to those skilled in the art. Nevertheless, the attached drawings are included to describe and explain illustrative examples of the present invention. The words and phrases used herein should be understood and interpreted to have a meaning consistent with the understanding of those words and phrases by those skilled in the relevant art. No special definition of a term or phrase, *i*.*e*., a definition that is different from the ordinary and customary meaning as understood by those skilled in the art, is intended to be implied by consistent usage of the term or phrase herein. To the extent that a term or phrase is intended to have a special meaning, *i*.*e*., a meaning other than that understood by skilled artisans, such a special definition will be expressly set forth in the specification in a definitional manner that directly and unequivocally provides the special definition for the term or phrase.

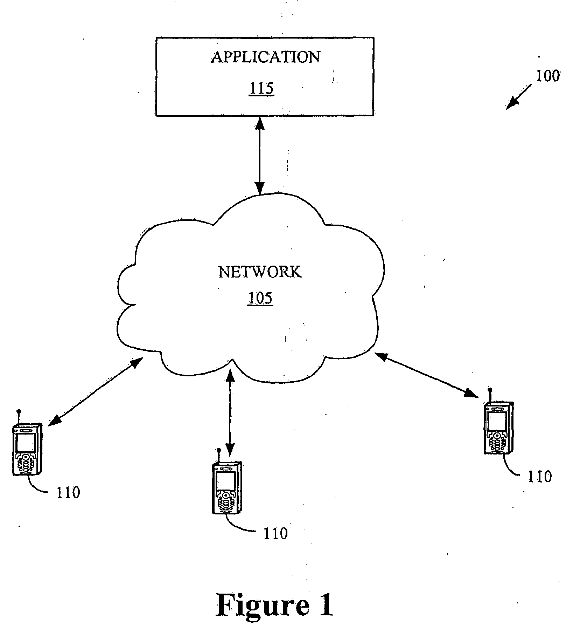

Referring now to Figure 1, a telecommunication system 100 including a network 105 is shown. The network 105 may be used to provide various telecommunication services to users 110. The telecommunications services may include, but are not limited to, voice and data transmission and/or reception. In the illustrated embodiment, the users 110 are mobile telephones and the network 105 is a wireless telecommunication network. However, persons of ordinary skill in the art should appreciate that the present invention is not limited to mobile telephones and/or a wireless network. In various alternative embodiments, the users 110 may use other types of wired or wireless telephones, personal computers, laptop computers, personal data assistants, pagers, and the like, which may be coupled to a wired and/or wireless telecommunications network. Accordingly, in alternative embodiments, the network 105 may be any desirable combination of wireless and/or wired networks,such as a Plain Old Telephone Service (POTS) network, a Public Switched Data Network (PSDN), a Universal Mobile Telephone Service (UMTS) network, a Global System for Mobile telecommunications (GSM) network, a Bluetooth network, a network based on one or more 802.11 protocols, and the like.

One or more applications 115 provide services to the network 105 and/or the mobile units 110. The services may be provided based on the availability of the mobile unit 110 and/or the availability of the user of the mobile unit 110. For example, the application 115 may be a presence-aware calendar application that is capable of directing incoming voice calls and/or data transmissions to the mobile unit 110 or to some other service, such as a voicemail service, depending on the availability of the mobile unit 110 and/or the availability of the user of the mobile unit 110. If the mobile unit 110, and/or the associated user, is available, the calendar service provides the incoming voice calls and/or data transmissions to the mobile unit 110. If the mobile unit 110 and/or the associated user is not available, the calendar service provides the incoming voice calls and/or data transmissions to another service, such as a voicemail service or a data storage service. For another example, the application 115 may be an instant messaging system that is capable of transmitting short messages to the user 110, or receiving messages from the user 110, depending on the availability of the user 110.

The user of the mobile unit 110 may provide an explicit presence event to the network 105, which may use the explicit presence event to determine the availability of the user and/or the mobile unit 110. In general, explicit presence events are actions taken by the user to indicate a change in his or her availability to the network 105. For example, the user may power down the mobile unit 110 and the power down event may be transmitted to the network 105 as an explicit presence event indicating that the mobile unit 110 is no longer available. For another example, the user may provide a predetermined series of keystrokes to indicate that he or she is unavailable. For yet another example, the user may provide the time and/or date of unavailability to the network 105 and/or the application 115. A previously unavailable user may also explicitly indicate that he or she is available to receive voice calls and/or data transmissions. For example, the user may power up the mobile unit when he or she is available to receive voice calls and/or data transmissions.

The mobile unit 110 also detects implicit presence events. In contrast to explicit presence events, in which the user and/or the mobile unit 110 provides a direct indication of a change in the availability status of the user and/or the mobile unit 110, implicit presence events are user and/or mobile unit 110 actions or circumstances that indicate a possible change in the availability of the user and/or the mobile unit 110. Implicit presence events include a single action performed by the user and/or the mobile unit 110. For example, the user may switch his or her mobile unit 110 from ringing mode to silent mode or vibrate mode. For another example, the user may switch his or her mobile unit 110 from silent mode to ringing mode. For yet another example, a low battery power condition in the mobile unit 110 may be detected as an implicit presence event. For yet another example, an implicit presence event may include the user typing a pending text message, such as a Short Message Service (SMS) message, an instant message, and the like.

Implicit presence events may also include a combination of actions and/or circumstances associated with the user and/or the mobile unit 110. For example, the user may provide an indication to the mobile unit 110 that the user will be entering a meeting at a predetermined time. The user may then switch his or her mobile unit 110 from ringing mode to silent mode at approximately the predetermined meeting time. The combination of the indication of the predetermined meeting time and the change in the ring mode of the mobile unit 110 may indicate that the user is not available to receive calls and may therefore be detected as an implicit presence event. For another example, the low battery power condition in the mobile unit 110 may be considered an indication that the mobile unit 110 is unavailable for battery-intensive applications, such as an hour-long multimedia teleconference. However, the low battery power condition in the mobile unit 110 may not be considered an indication that the mobile unit 110 is unavailable for less battery-intensive applications, such as receiving a text message.

The mobile unit 110 notifies the network 105 and/or the application 115 of a change in its availability status by translating, mapping, or converting implicit presence events to explicit presence events. In one embodiment, the mobile unit 110 detects an implicit presence event, such as the implicit presence events discussed above. The mobile unit 110 then forms an explicit presence event based on the implicit presence event and provides the explicit presence event to the network. By providing explicit presence events based upon implicit presence events associated with the user and/or the mobile unit 110, the end-user experience of a presence-aware application 115 becomes more seamless and may require less explicit status reporting by the user. Moreover, in one embodiment, mobile units 110 that are capable of forming explicit presence events based on implicit presence events may interact with conventional networks 105 that expect to receive only explicit presence events. Thus, the reporting of implicit presence events as explicit presence events need not be implemented for the entire network 105 and may instead be implemented in one or more mobile units 110 as needed or desired.

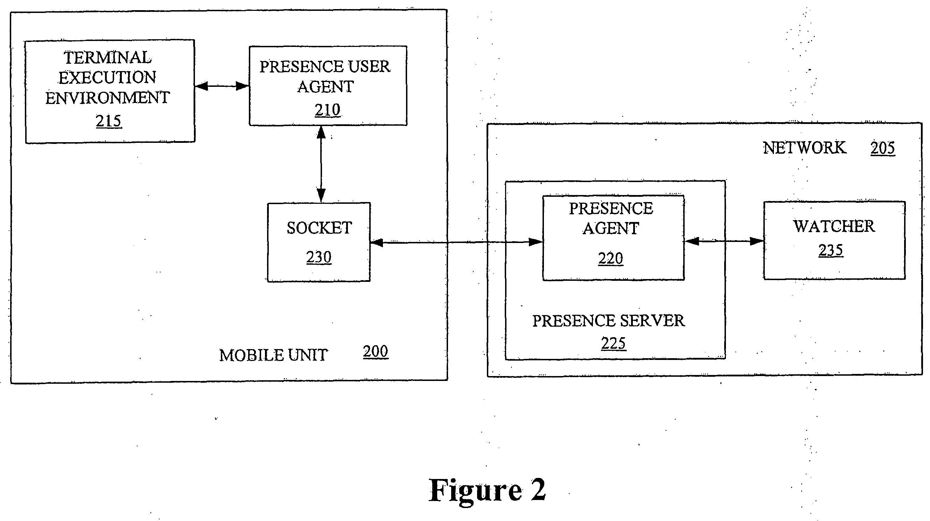

Figure 2 conceptually illustrates one exemplary embodiment of a mobile unit 200 that forms implicit presence events based on explicit presence events and reports the explicit presence events to a network 205. A presence user agent 210 interacts with a terminal execution environment 215 to detect implicit presence events associated with the user and/or the mobile unit 200. The terminal execution environment 215 is implemented in software on a terminal chipset. However, any desirable combination of software and/or hardware may be used to implement the terminal execution environment. In the illustrated embodiment, the presence user agent 210 is a software application written using a Binary Runtime Environment for Wireless (BREW), which is a client-side runtime environment for small-scale mobile applications. However, the presence user agent 210 is not limited to BREW applications. In alternative embodiments, the presence user agent may be any combination of software and/or hardware and may utilize any desirable runtime environment including, but not limited to, a Mobile Station Execution Environment (MEXE), a Java 2 Micro Edition (J2ME) environment, and the like.

The presence user agent 210 forms an explicit presence event based on the implicit presence event. For example, the presence user agent 210 may translate, convert, or map an implicit presence event (such as the user switching from ringing mode to silent mode) to an explicit presence event, such as a message indicating that the user and/or the mobile unit 200 is unavailable. The presence user agent 210 may then provide the explicit presence event to a presence agent 220 on a presence server 225 in the network 205. For example, if the mobile unit 200 is Instant Message and Presence enabled, e.g. the terminal supports the Internet Engineering Task Force Session Initiation Protocol (SIP)/SIP for Instant Messaging and Presence Leveraging Extensions (IETF SIP/SIMPLE) protocol, the presence user agent 210 can open a socket 230 that may be used to transmit the explicit presence event to the presence agent 220.

The presence agent 220 may then send the explicit presence event to a watcher 235. For example, the watcher 235 may be a presence-aware calendar application, such as the application 115 shown in Figure 1. The design and operation of the presence agent 220 and the presence server 225 are known to persons of ordinary skill in the art and therefore will not be described further herein.

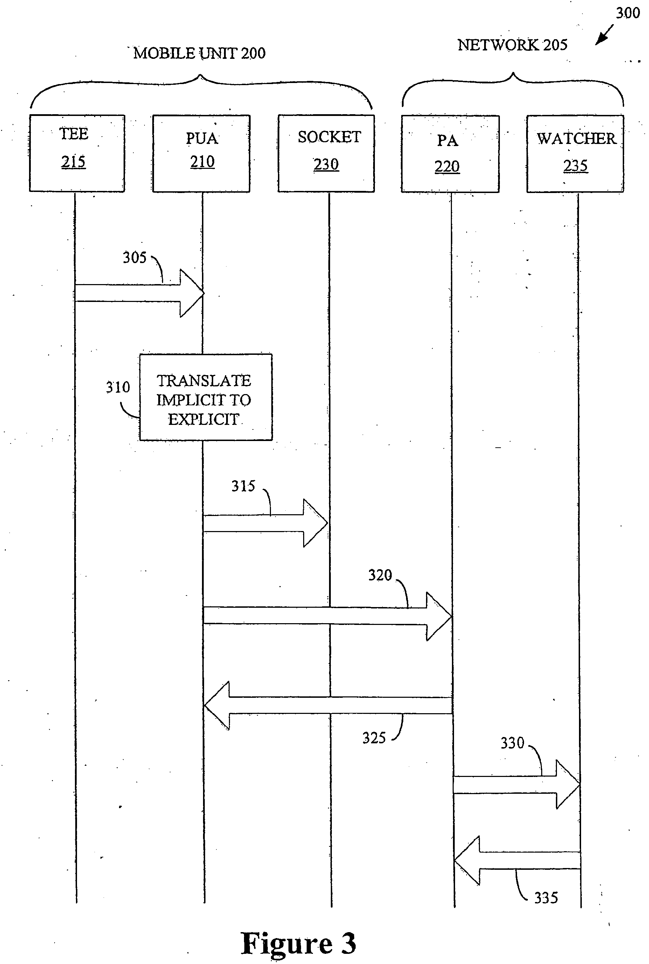

Figure 3 conceptually illustrates one exemplary embodiment of a method 300 of notifying the network 205 of a change in the availability status of the mobile unit 200. In the illustrated embodiment, the terminal execution environment 215 provides (at 305) an indication of an implicit presence event to the presence user agent 210. The presence user agent 210 translates (at 310) the implicit presence event into an explicit presence event and opens (at 315) the socket 230. Using the socket 230, the presence user agent 210 publishes (at 320) the explicit presence event by providing the explicit presence event to the presence agent 220. The presence agent 220 may then acknowledge (at 325) reception of the published explicit presence event. The presence agent 220 notifies (at 330) the watcher 235 of the published explicit presence event and the watcher 235 may acknowledge (at 335) receipt of the notification of the published explicit presence event.

The particular embodiments disclosed above are illustrative only, as the invention may be modified and practiced in different but equivalent manners apparent to those skilled in the art having the benefit of the teachings herein. Furthermore, no limitations are intended to the details of construction or design herein shown, other than as described in the claims below. It is therefore evident that the particular embodiments disclosed above may be altered or modified and all such variations are considered within the scope and spirit of the invention. Accordingly, the protection sought herein is as set forth in the claims below.

## Claims

1. A method of notifying a network of a change in availability status of a mobile unit, comprising:
detecting an implicit presence event associated with the mobile unit;
forming an explicit presence event based on the implicit presence event; and
providing the explicit presence event to the network.

2. The method of claim 1, wherein detecting the implicit presence event comprises detecting a user action indicative of a change in an availability status of a user associated with the mobile unit.

3. The method of claim 2, wherein detecting the user action indicative of the change in the user's availability status comprises detecting a user action indicating that an available user has become unavailable.

4. The method of claim 2, wherein detecting the user action indicative of the change in the user's availability status comprises detecting a user action indicating that an unavailable user has become available.

5. The method of claim 1, wherein detecting the implicit presence event comprises detecting a change in a ring mode of the mobile unit, detecting a low battery condition in the mobile unit, and detecting a pending text message.

6. The method of claim 1, wherein forming the explicit presence event based on the implicit presence event comprises at least one of translating, mapping, and converting an implicit presence event to the explicit presence event.

7. The method of claim 1, wherein providing the explicit presence event comprises opening a socket on the mobile unit.

8. The method of claim 7, wherein providing the explicit presence event comprises transmitting the explicit presence event to a presence agent on a presence server in the network using the socket.

9. The method of claim 1, further comprising providing an indication of the explicit presence event to at least one of an application and a watcher.

10. A method of detecting a change in availability status of a mobile unit, comprising:
receiving an explicit presence event that was formed by the mobile unit based on an implicit presence event; and
determining that the availability status of the mobile unit has changed based on the explicit presence event.
